Europäisches Patentamt

European Patent Office

Office européen des brevets

(19)

(11) Veröffentlichungsnummer: **0 035 234**
**A2**

(12) # EUROPÄISCHE PATENTANMELDUNG

(21) Anmeldenummer: **81101375.4**

(51) Int. Cl.³: **G 05 B 19/08**

(22) Anmeldetag: **25.02.81**

(30) Priorität: **29.02.80 DE 8005555 U**

(43) Veröffentlichungstag der Anmeldung: **09.09.81**
**Patentblatt 81/36**

(84) Benannte Vertragsstaaten: **DE FR GB IT SE**

(71) Anmelder: **SIEMENS AKTIENGESELLSCHAFT Berlin und München, Postfach 22 02 61, D-8000 München 22 (DE)**

(72) Erfinder: **Dannhäuser, Friedrich, Dr., Freischützstrasse 17, D-8000 München 81 (DE)**
Erfinder: **Hagedorn, Horst, Dipl.-Astr., Zweigstrasse 18, D-8038 Gröbenzell (DE)**
Erfinder: **Müller, Rüdiger, Dr., Putzbrunnerstrasse 131, D-8000 München 83 (DE)**
Erfinder: **Preissinger, Karl Heinz, Dipl.-Phys., Enzianring 115, D-8028 Taufkirchen (DE)**

(54) **Auswahlschalter.**

(57) Die Erfindung betrifft einen Auswahlschalter für einen unterteilbaren Datenspeicher in einer Vorrichtung zur Steuerung und/oder Regelung von Maschinen. Der Auswahlschalter (1) besteht aus einem Kunststoffteil (2) und einer in das Kunststoffteil (2) eingesteckten Leiterplatte (3). Auf der Leiterplatte (3) ist für jedes zu codierende Bit eine Leiterbahn (4) angeordnet, wobei die mit ∅ zu codierenden Bits untereinander und mit Masse elektrisch leitend verbunden sind. Die Erfindung eignet sich insbesondere zur Steuerung und/oder Regelung von Verbrennungsmaschinen in Kraftfahrzeugen.

SIEMENS AKTIENGESELLSCHAFT   Unser Zeichen
Berlin und München          VPA

## Auswahlschalter

Die Erfindung betrifft einen Auswahlschalter für einen
unterteilbaren Datenspeicher in einer Vorrichtung zur
Steuerung und/oder Regelung von Maschinen.

Derartige Vorrichtungen, welche neben dem unterteilbaren Datenspeicher einen Programmspeicher sowie einen
Mikrokomputer aufweisen werden in zunehmendem Maße zur
Steuerung und/oder Regelung von Maschinen verschiedenster Art, beispielsweise in der Autoelektronik, der
Haushaltselektronik oder in der Werkzeugmaschinentechnik
angewendet. Zur Optimierung der Steuerungs- bzw. Regelungsprozesse erweist sich die sogenannte flexible Software als sehr geeignet. Dabei würde ein- und dasselbe
Steuerprogramm für eine Reihe gleichartiger Maschinen
ausreichen, wenn die Eingangsgrößen der Sensoren sich
nicht unterscheiden würden. Z.B. genügt für eine Temperaturregelung oft das gleiche Steuerprogramm. Wenn jedoch Temperatursensoren mit verschiedener Charakteristik
verwendet werden, müssen numerisch andere Zahlenwerte,
z.B. in Tabellenform, im Programmspeicher stehen. Dies
erfordert eine große Typenvielfalt maskenprogrammierter
Speicher oder die Verwendung von teuren programmierbaren Speichern. Für den Service bedeutet dies eine große
Lagerhaltung oder die Investition für die Geräte zum
Programmieren der Speicher (PROM) an Ort und Stelle.

Bisher war deshalb ein großer Lageraufwand für diese
Typenvielfalt notwendig, wobei dieser Aufwand für verschiedene austauschbare Speicherbausteine bzw. austauschbare Platinen erforderlich war.

Sac 1 Pj
28.02.1980

0035234

Mit einem unterteilbaren Datenspeicher, bei dem in den einzelnen Abschnitten Parameter einzelner der Steuerung und/oder Regelung dienender Sensoren gespeichert sind, kann der genannte große Aufwand wesentlich reduziert werden.

Aufgabe der Erfindung ist es, einen Auswahlschalter anzugeben, welcher zur Ansteuerung der einzelnen Abschnitte des unterteilbaren Datenspeichers dient.

Diese Aufgabe wird mit einem Auswahlschalter der eingangs genannten Art erfindungsgemäß dadurch gelöst, daß der Auswahlschalter aus einem Kunststoffteil und einer in das Kunststoffteil eingesteckten Leiterplatte besteht.

Gemäß einer Weiterbildung der Erfindung ist auf der Leiterplatte für jedes zu codierende Bit eine Leiterbahn angeordnet.

Eine weitere Ausgestaltung der Erfindung besteht darin, daß die mit $\emptyset$ zu codierenden Bits untereinander und mit Masse elektrisch leitend verbunden sind.

Zweckmäßigerweise ist in der Leiterplatte eine Justierkerbe angeordnet.

Die Vorteile des Gegenstandes der Erfindung werden an Hand von Ausführungsbeispielen erläutert.

In der dazugehörenden Zeichnung zeigen:
Fig. 1 eine Seitenansicht,
Fig. 2 eine Stirnansicht und
Fig. 3 eine Unteransicht des erfindungsgemäßen Auswahlschalters,

Fig. 4 eine vergrößerte Darstellung der
Leiterplatte und

Fig. 5 eine Schaltungsanordnung für den
Auswahlschalter.

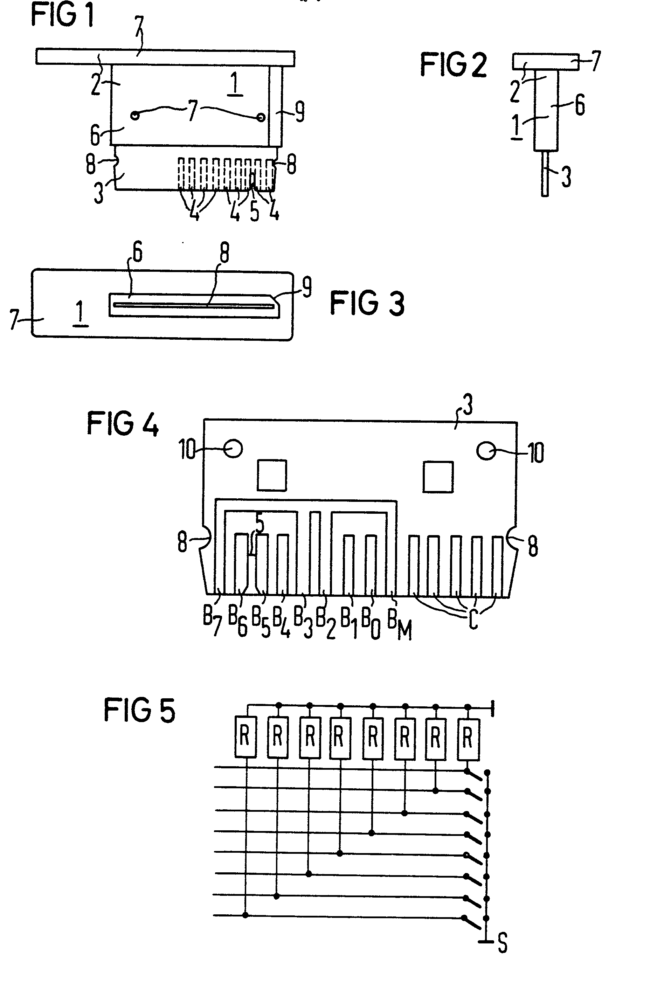

In der Fig. 1 ist der erfindungsgemäße Auswahlschalter 1 dargestellt, welcher aus einem Kunststoffteil 2 und einer in das Kunststoffteil 2 eingesteckten Leiterplatte 3 besteht. Das Kunststoffteil 2 besteht dabei aus einem länglichen Teilstück 6, welches zur Aufnahme der Leiterplatte 3 einen in der Figur nicht sichtbaren Schlitz aufweist sowie einem breiteren Stück 7, welches der besseren Handhabung beim Einstecken des Auswahlschalters 1 dient. Die Leiterplatte 3 ist vorzugsweise klemmend in dem länglichen Teilstück 6 befestigt und beispielsweise mittels im Inneren des Stückes 6 angeordneten Klemmvorrichtungen 7, welche in entsprechende Ausnehmungen der Leiterplatte 3 einrasten, gesichert. Auf der Leiterplatte 3 sind für jedes zu codierende Bit Leiterbahnen 4 angeordnet. Die Leiterbahnen 4 sind beim Ausführungsbeispiel der Fig. 1 in Blickrichtung unterhalb der Zeichenebene auf der anderen Seite der Leiterplatte 3 angeordnet und deshalb nur schematisiert dargestellt. Weiterhin weist die Leiterplatte 3 eine Justierkerbe 5 und Ausnehmungen 8 auf, welche der sicheren Fixierung des Auswahlschalters 1 in der Steuervorrichtung dienen. Ferner weist das längliche Stück 6 eine abgeflachte Führungsnut 9 auf, damit der Auswahlschalter 1 nicht seitenverkehrt in der Steuervorrichtung befestigt werden kann.

In der Fig. 2, welche eine Stirnansicht des erfindungsgemäßen Auswahlschalters 1 darstellt, ist zu erkennen, daß das Kunststoffteil 2 aus einem länglichen Teilstück 6 und einem darauf angeordneten breiteren, plattenförmigen Teil 7 besteht. Im länglichen Teilstück 6 ist die
Leiterplatte 3 befestigt.

In der Fig. 3 ist eine Unteransicht des erfindungsgemäßen Auswahlschalters 1 dargestellt. Unter der breiten
Deckplatte 7 befindet sich das längliche Teilstück 6 in
welchem die Leiterplatte 3 gehaltert ist. Am Teilstück 6
befindet sich die Abflachung 9, welche zur seitenrichtigen Einführung des Auswahlschalters 1 in die Steuervorrichtung dient.

In der Fig. 4 ist eine vergrößerte Darstellung der Leiterplatte 3 mit Blick auf die kaschierte Plattenseite
(in Fig. 1 ist die Blickrichtung auf die unkaschierte
Plattenseite) dargestellt. Die Leiterplatte 3 weist
Bohrungen 10 auf, in welche die in der Fig. 1 dargestellten Klemmvorrichtungen 7 eingreifen können. In der
Figur ist dabei eine Leiterplatte dargestellt, welche
eine 8 Bit-Codierung aufweist. Die Leiterbahnen C sind
dabei in die Codierung nicht einbezogen. Die Leiterbahnen $B_2$, $B_3$ und $B_7$, welche den mit $\emptyset$ zu codierenden
Bits entsprechen sind untereinander und mit der mit
Masse verbundenen Leiterbahn $B_M$ elektrisch leitend verbunden. Somit ergibt sich als Code 11$\emptyset\emptyset$ 111$\emptyset$.

In der Fig. 5 ist eine Schaltungsanordnung dargestellt,
welche den Einsatz des Auswahlschalters 1 gemäß der
Erfindung darstellt. Der Auswahlschalter 1 wird dabei an
der mit S bezeichneten Stelle eingesetzt. Bei den Leiterbahnen, welche den mit $\emptyset$ zu codierenden Bits entsprechen,
wird dabei die Verbindung über die jeweiligen Widerstände R mit Masse hergestellt.

80 P 0035234 E

Die Auswahl, welche der verschiedenen Typenparameter und spezifischen Programmpassagen des Speicherbausteines erfolgen soll, wird durch Auswechseln der Leiterplatte im Auswahlschalter 1 bewirkt. Die Leiterplatte 1 ist dabei mit dem jeweils entsprechenden Codiermuster versehen. Somit kann durch Auswechseln der Leiterplatte 3 dasselbe Gerät in einfachster Weise auf jede im Programm vorgesehene Type umgestellt werden. Die Lagerhaltungsvielfalt beschränkt sich somit auf eine entsprechende Anzahl verschieden codierter Leiterplatten 3 welche in den fest mit der Steuervorrichtung verbundenen Auswahlschalter 1 eingesteckt werden.

Mit dem in der Figur dargestellten Ausführungsbeispiel von 8 Bit lassen sich dabei schon 256 verschiedene Typen auswählen. Zweckmäßigerweise werden dabei zusammengehörigen Parametergruppen bzw. -tabellen bestimmte Auswahlschalterbits zugeordnet.

So kann beispielsweise, wenn der erfindungsgemäße Auswahlschalter in einem Bordcomputer für Kraftfahrzeuge eingesetzt wird, folgende Zuordnung getroffen werden:

Bits 0, 1, 2 charakterisieren den Radsensortyp, wobei der Unterschied der Typen in der pro abgegebenen Impuls zurückgelegten Wegstrecke besteht;
Bits 4, 5 wählen aus vier Tankversionen verschiedener Form und Größe aus;
Bits 3, 7 wählen unter vier verschiedenen Benzin-Einspritz-Aggregaten aus;
Bit 6 ist freigehalten.

Da im Auswahlschalter somit jeder Radsensor unabhängig mit jedem Tank und jedem Einspritzaggregat gekoppelt werden kann, ergeben sich insgesamt 128 einstellbare Typen. Somit gestattet der erfindungsgemäße Auswahlschalter in einfacher Weise einen unterteilbaren Speicher in Steuervorrichtungen anzusteuern.

4 Patentansprüche,
5 Figuren.

0035234
80 P 1032 E

## Patentansprüche

1. Auswahlschalter für einen unterteilbaren Datenspeicher in einer Vorrichtung zur Steuerung und/oder Regelung von Maschinen, d a d u r c h g e k e n n - z e i c h n e t , daß der Auswahlschalter (1) aus einem Kunststoffteil (2) und einer in das Kunststoffteil (2) eingesteckten Leiterplatte (3) besteht.

2. Auswahlschalter nach Anspruch 1, d a d u r c h g e k e n n z e i c h n e t , daß auf der Leiterplatte (3) für jedes zu codierende Bit eine Leiterbahn (4) angeordnet ist.

3. Auswahlschalter nach Anspruch 2, d a d u r c h g e k e n n z e i c h n e t , daß die mit Ø zu codie- renden Bits untereinander und mit Masse elektrisch leitend verbunden sind.

4. Auswahlschalter nach einem der Ansprüche 1 bis 3, d a d u r c h g e k e n n z e i c h n e t , daß in der Leiterplatte (3) eine Justierkerbe (5) angeordnet ist.

**FIG 1**

**FIG 2**

**FIG 3**

**FIG 4**

**FIG 5**